# EUROPEAN PATENT APPLICATION

(11) **EP 4 726 232 A1**
(43) Date of publication of application: **15.04.2026**
(21) Application number: 23940787.7
(22) Date of filing: 27.11.2023
(51) Int. Cl.: F16F 13/10, F16F 15/08

(54) **VIBRATION-PROOFING DEVICE**

(30) Priority: 07.06.2023 JP 2023094375
(71) Applicant: Prospira Corporation, Kanagawa prefecture 212-0013 (JP)
(72) Inventor: MAEDA, Naoki, Kawasaki city, Kanagawa 212-0013 (JP)
(74) Representative: Scott, Stephen John
(86) International application number: PCT/JP2023/042377
(87) International publication number: WO 2024/252692

(57) **Abstract**

An anti-vibration device (1) includes an outer member (2) connected to one of a vibration-generating side or a vibration-receiving side, an inner member (3) connected to the other of the vibration-generating side or the vibration-receiving side, and an elastic member (4) linking the outer member (2) and the inner member (3) and disposed inside the outer member (2). A stopper (5) restricts relative movement between the outer member (2) and the inner member (3) by contact with the outer member (2). The stopper (5) is supported by the elastic member (4).

## Description

### TECHNICAL FIELD

The present disclosure relates to an anti-vibration device. The present application claims priority to and the benefit of Japanese Patent Application No. 2023-094375, filed June 7, 2023, the entire contents of which are incorporated herein by reference.

### BACKGROUND

Among conventional anti-vibration devices, there is a known anti-vibration device that includes an outer member (bracket) connected to one of a vibration-generating side or a vibration-receiving side, a first attachment member linked to the outer member, an inner member (second attachment member) connected to the other one of the vibration-generating side or the vibration-receiving side and positioned inside the bracket, and an elastic member (elastic body) that links the outer member and the inner member (see, for example, Patent Literature (PTL) 1). The inner member is provided with a stopper portion (press-fitted cylindrical portion) that is formed integrally with the elastic member, and the stopper portion is disposed inside the bracket. The stopper portion is able to restrict relative movement between the outer member and the inner member by contact with the outer member.

### CITATION LIST

### Patent Literature

PTL 1: JP 2017-096331 A

### SUMMARY

### (Technical Problem)

In the conventional anti-vibration device described above, the stopper portion is formed integrally with the elastic member. Therefore, the spring constant of the stopper portion is lower than the spring constant of the second attachment member. Therefore, according to the conventional anti-vibration device, soft spring properties can be achieved when in contact with the bracket.

However, in the conventional anti-vibration device described above, the stopper portion is supported by the second attachment member. Therefore, in reality, the spring constant of the stopper portion increases immediately after coming into contact with the bracket. That is, in the conventional anti-vibration device, the actual spring properties become stiff immediately after contact with the bracket. Therefore, when the conventional anti-vibration device is used as an engine mount, there is a risk that ride comfort will be adversely affected.

It would be helpful to provide an anti-vibration device that can reliably restrict excessive displacement between an outer member and an inner member while suppressing an increase in a spring constant after coming into contact with a stopper.

### (Solution to Problem)

(1) The anti-vibration device according to the present disclosure comprises: an outer member connected to one of a vibration-generating side or a vibration-receiving side; an inner member connected to the other of the vibration-generating side or the vibration-receiving side; an elastic member linking the outer member and the inner member and disposed inside the outer member; and a stopper configured to restrict relative movement between the outer member and the inner member by contact with the outer member, the stopper being supported by the elastic member. According to the anti-vibration device, it is possible to reliably restrict excessive displacement between the outer member and the inner member while suppressing an increase in the spring constant after coming into contact with the stopper.
(2) The anti-vibration device according to (1) above, wherein the inner member has an annular portion with a through portion, and the stopper is supported by the elastic member including the elastic member disposed in the through portion. In this case, the stopper can be supported by the elastic member with a simple structure.
(3) The anti-vibration device according to (2) above, wherein the elastic member comprises a connection portion that connects the outer member and the inner member so as to be aligned along a line in a direction in which a shared axis extends, and a leg portion that supports the inner member relative to the outer member, and the elastic member covers the annular portion of the inner member so as to surround the connection portion of the elastic member. In this case, an increase in the spring constant after coming into contact with the stopper is effectively suppressed.
(4) The anti-vibration device according to (2) above, wherein an inner circumferential surface of the annular portion of the inner member is covered by the elastic member. In this case, durability can be improved.

### (Advantageous Effect)

According to the present disclosure, it is possible to provide an anti-vibration device that can reliably restrict excessive displacement between an outer member and an inner member while suppressing an increase in a spring constant after coming into contact with a stopper.

### BRIEF DESCRIPTION OF THE DRAWINGS

In the accompanying drawings:
FIG. 1 is a perspective view diagram schematically illustrating an anti-vibration device according to an embodiment of the present disclosure, viewed from a vehicle width direction outer side;
FIG. 2 is a side view diagram schematically illustrating the anti-vibration device of FIG. 1 from the vehicle width direction outer side;
FIG. 3 is a cross-section diagram schematically illustrating the anti-vibration device of FIG. 2, taken along a line A-A;
FIG. 4 is an exploded view diagram schematically illustrating the anti-vibration device of FIG. 1, divided into an outer member and an inner member provided with an elastic member;
FIG. 5 is a side view diagram schematically illustrating the inner member provided with the elastic member illustrated in FIG. 4, viewed from the vehicle width direction outer side;
FIG. 6 is a rear view diagram schematically illustrating the inner member provided with the elastic member illustrated in FIG. 5;
FIG. 7 is a side view diagram schematically illustrating the inner member illustrated in FIG. 6, viewed from the vehicle width direction outer side;
FIG. 8 is a rear view diagram schematically illustrating the inner member illustrated in FIG. 7, viewed from an overall length direction rear side; and
FIG. 9 is a diagram partially and schematically illustrating internal structure of the anti-vibration device of FIG. 2.

### DETAILED DESCRIPTION

Hereinafter, an anti-vibration device 1 according to an embodiment of the present disclosure is described with reference to the drawings.

According to the present embodiment, the anti-vibration device 1 can be mounted on a vehicle. The anti-vibration device 1 is disposed between a vibration-generating side and a vibration-receiving side, thereby elastically connecting the vibration-generating side and the vibration-receiving side. According to the present embodiment, the anti-vibration device 1 is an engine mount and connects an engine to a vehicle body. That is, according to the present embodiment, one of the vibration-generating side or the vibration-receiving side is the engine or the vehicle body, and the other of the vibration-generating side or the vibration-receiving side is the other of the engine or the vehicle body. However, according to the present embodiment, the anti-vibration device 1 does not have to be an engine mount. The anti-vibration device 1 may be an anti-vibration device other than an engine mount. Further, the anti-vibration device 1 may be an anti-vibration device for a vehicle other than an engine mount. Further, the anti-vibration device 1 may be an anti-vibration device for a vehicle that includes an engine mount.

In the following description, the term "overall length direction" refers to the front-to-rear direction (length direction) of the vehicle, and here refers to a direction when the anti-vibration device 1 is mounted on the vehicle. Further, the term "vehicle width direction" refers to the width direction of the vehicle, and here refers to a direction when the anti-vibration device 1 is mounted on the vehicle. Further, the term "vehicle height direction" refers to the height direction of the vehicle, and here refers to a direction when the anti-vibration device 1 is mounted on the vehicle.

In the following description, a direction in which an axis O extends may be referred to as an "axial direction". In particular, in the following description, a view from the "axial direction" may be referred to as an "axial direction view". Further, in the following description, a direction perpendicular to the axial direction may be referred to as a "perpendicular-to-axis direction". In particular, in the following description, a view from the "perpendicular-to-axis direction" may be referred to as a "perpendicular-to-axis direction view".

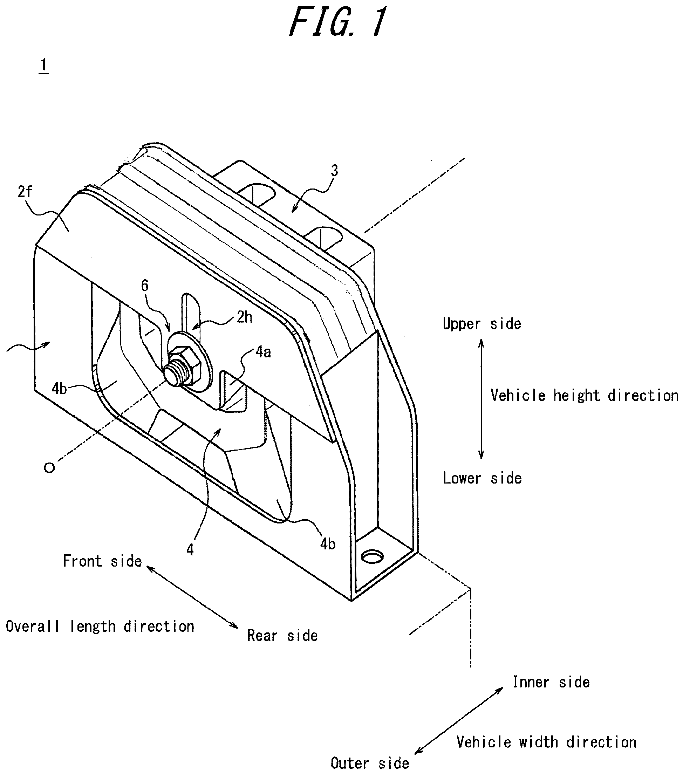

Referring to FIG. 1, the anti-vibration device 1 includes an outer member 2 connected to one of the vibration-generating side or the vibration-receiving side, an inner member 3 connected to the other of the vibration-generating side or the vibration-receiving side, and an elastic member 4 linking the outer member 2 and the inner member 3 and disposed inside the outer member 2.

According to the present embodiment, the outer member 2 is fixed to the vehicle body on the vibration-receiving side. As a result, the anti-vibration device 1 is supported on the vehicle body. On the other hand, according to the present embodiment, the inner member 3 is fixed to the engine on the vibration-generating side. As a result, the anti-vibration device 1 elastically supports the engine with respect to the vehicle body.

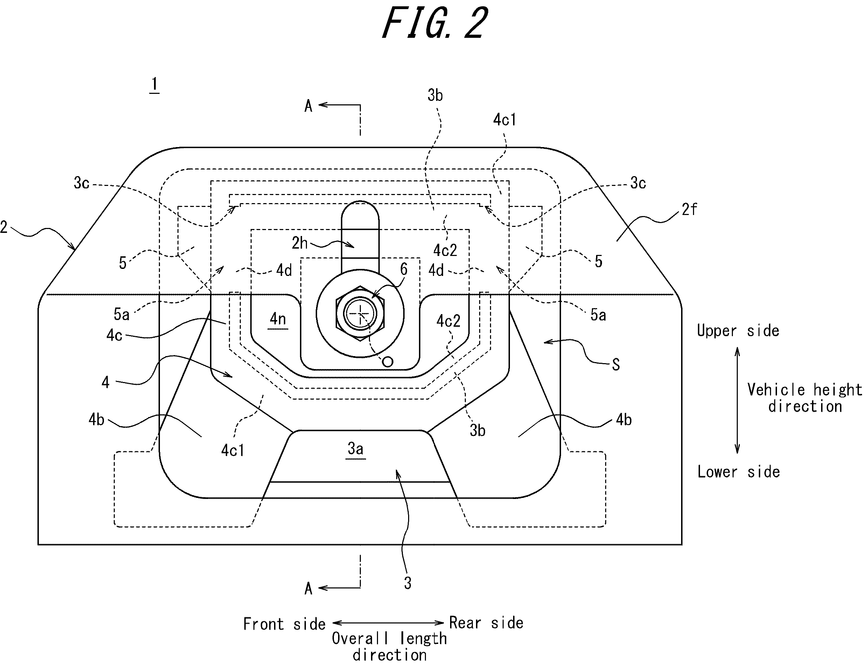

Referring to FIG. 2, the anti-vibration device 1 includes a stopper 5 that restricts relative movement between the outer member 2 and the inner member 3 by contact with the outer member 2. The stopper 5 is supported by the elastic member 4.

According to the present embodiment, the inner member 3 has an annular portion 3b in which a through portion 3c is formed. Additionally, according to the present embodiment, a support portion 5a of the stopper 5 is the elastic member 4 including the elastic member 4 disposed in the through portion 3c. According to the present embodiment, the stopper 5 is supported by the elastic member 4 that passes through the through portion 3c in the overall length direction. According to the present embodiment, the stopper 5 is supported by the support portion 5a composed of the elastic member 4 that has elasticity, which will be described later. As a result, according to the present embodiment, the stopper 5 is supported by the elastic member 4.

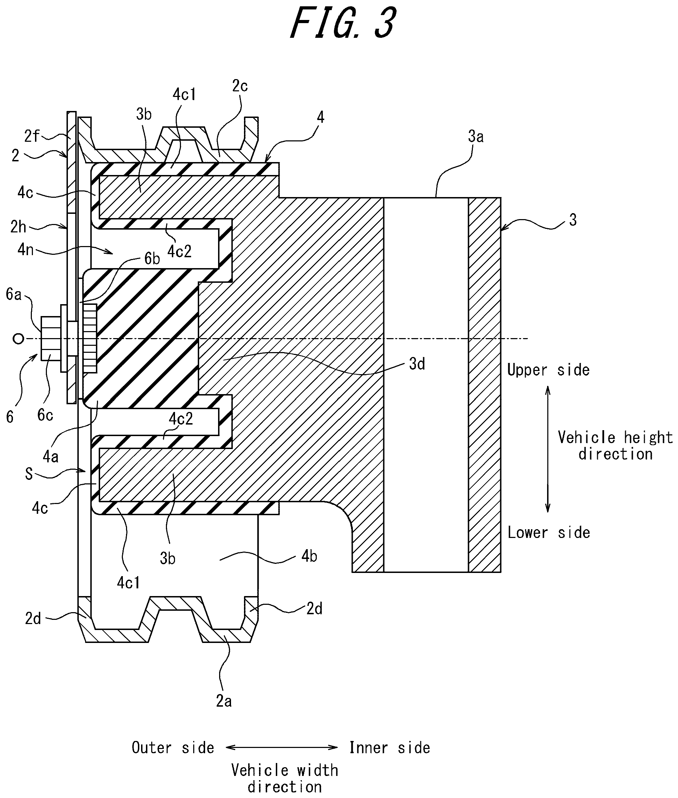

FIG. 3 schematically illustrates the anti-vibration device 1 in a cross-section taken along line A-A of FIG. 2. As illustrated in FIG. 3, according to the present embodiment, the elastic member 4 includes a connection portion 4a that connects the outer member 2 and the inner member 3 so as to be aligned along a line in a direction in which the axis O extends, and leg portions 4b that support the inner member 3 relative to the outer member 2. Further, according to the present embodiment, the elastic member 4 covers the annular portion 3b of the inner member 3 so as to surround the connection portion 4a.

The following describes the anti-vibration device 1 in more detail.

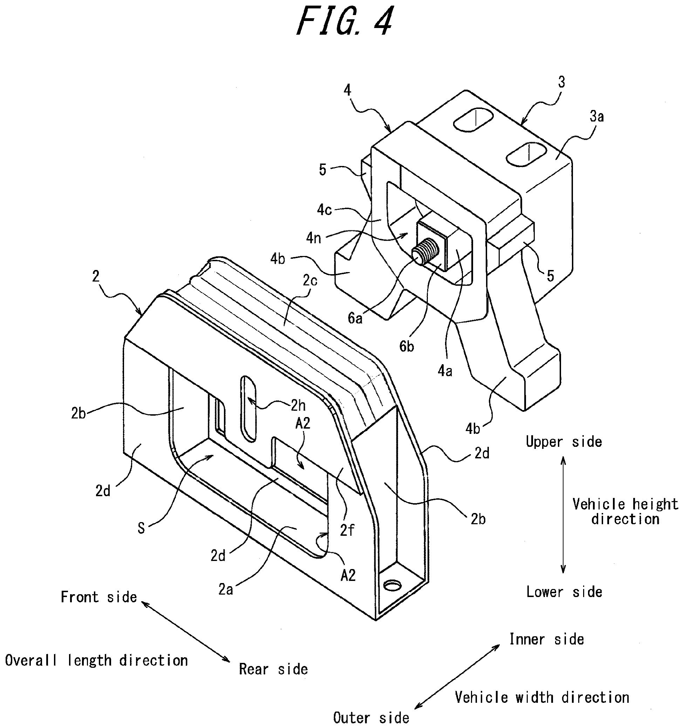

Referring to FIG. 4, according to the present embodiment, an accommodation space S for accommodating the elastic member 4 is formed inside the outer member 2. According to the present embodiment, the outer member 2 includes a lower wall 2a fixed to the vehicle body, two full-length direction walls 2b standing up from the lower wall 2a and spaced apart along the full-length direction, and an upper wall 2c connected to the upper ends of the two full-length direction walls 2b. In addition, according to the present embodiment, the outer member 2 includes two vehicle width direction walls 2d spaced apart from each other in the vehicle width direction. An opening A2 is formed in each of the two vehicle width direction walls 2d. Further, according to the present embodiment, the outer member 2 includes a connection plate 2f. According to the present embodiment, the connection plate 2f is attached to the vehicle width direction wall 2d that is on the vehicle width direction outer side out of the two vehicle width direction walls 2d. According to the present embodiment, the connection plate 2f closes an upper portion of the opening A2 formed in the vehicle width direction wall 2d. Additionally, according to the present embodiment, the connection plate 2f is formed with a long hole 2h extending in the vehicle height direction. According to the present embodiment, the accommodation space S is defined by the configuration described above. According to the present embodiment, the outer member 2 is formed as one piece.

According to the present embodiment, the inner member 3 includes an attachment portion 3a. According to the present embodiment, an engine is attached to the attachment portion 3a. The elastic member 4 is integrally formed on the vehicle width direction outer side of the inner member 3.

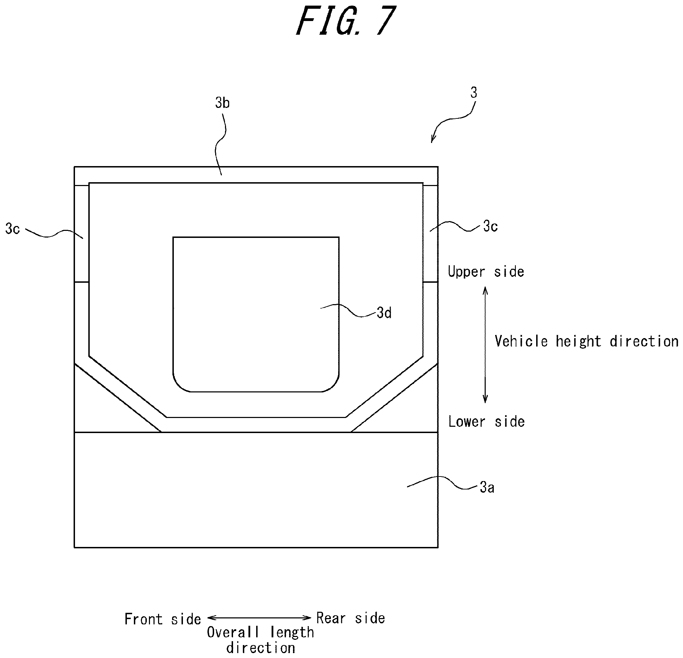

As illustrated in FIG. 7, according to the present embodiment, the inner member 3 includes the annular portion 3b. The annular portion 3b extends from the attachment portion 3a to one side in the vehicle width direction (the vehicle width direction outer side according to the present embodiment). According to the present embodiment, the inner member 3 further includes a protruding portion 3d on the inner side of the annular portion 3b. The protruding portion 3d also extends from the attachment portion 3a to one side in the vehicle width direction (the vehicle width direction outer side according to the present embodiment). According to the present embodiment, the protruding portion 3d functions as a base on which the connection portion 4a of the elastic member 4 is disposed.

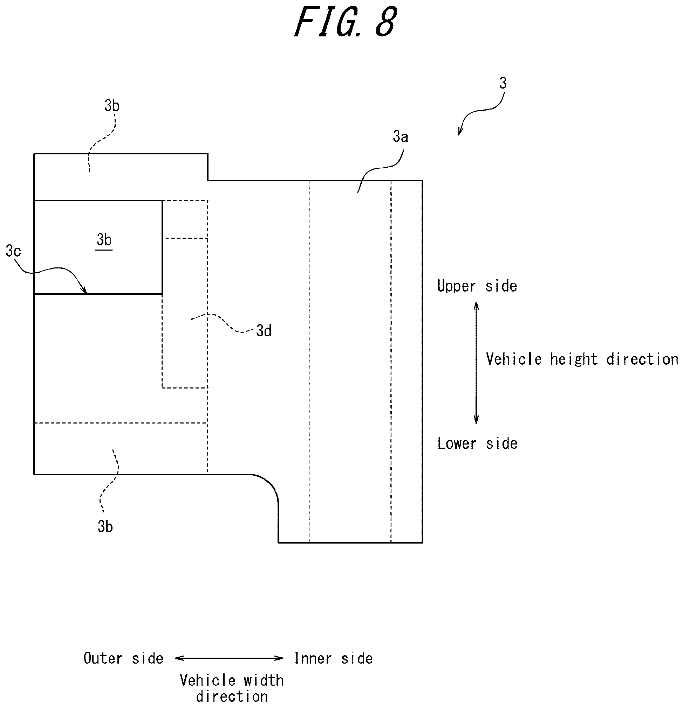

According to the present embodiment, the through portion 3c is a notch formed in the annular portion 3b. As illustrated in FIG. 8, according to the present embodiment, the through portion 3c extends from one side end of the annular portion 3b in the vehicle width direction (according to the present embodiment, the vehicle width direction outer side end of the annular portion 3b) to the other side in the vehicle width direction (according to the present embodiment, the vehicle width direction inner side of the annular portion 3b). As illustrated in FIG. 8, according to the present embodiment, the through portion 3c is formed to coincide with one side end of the protruding portion 3d in the vehicle width direction (according to the present embodiment, the vehicle width direction outer side end of the protruding portion 3d). However, the through portion 3c can be formed to extend further than one side end of the protruding portion 3d in the vehicle width direction (according to the present embodiment, the vehicle width direction outer side end of the protruding portion 3d) to a position on the vehicle width direction other side (vehicle width direction inner side). Further, the through portion 3c can be formed relative to one side end of the protruding portion 3d in the vehicle width direction (according to the present embodiment, the vehicle width direction outer side end of the protruding portion 3d) to a position on the one side in the vehicle width direction (vehicle width direction outer side).

According to the present embodiment, the outer member 2 and the inner member 3 are each formed of a high-rigidity material having high rigidity. Examples of high-rigidity materials include metals and resins such as engineering plastics.

As illustrated in FIG. 3, according to the present embodiment, the elastic member 4 includes a covering portion 4c that covers the annular portion 3b of the inner member 3. According to the present embodiment, the connection portion 4a and the leg portions 4b are integrally formed via the covering portion 4c. According to the present embodiment, the covering portion 4c includes an outer layer 4c1 that covers the outer circumferential surface of the annular portion 3b of the inner member 3, and an inner layer 4c2 that covers the inner circumferential surface of the annular portion 3b of the inner member 3. According to the present embodiment, the elastic member 4 is press-fitted into the accommodation space S of the outer member 2. According to the present embodiment, the elastic member 4 is attached to the outer member 2 by press-fitting the covering portion 4c and the leg portions 4b between the lower wall 2a and the upper wall 2c of the outer member 2. In addition, referring to FIG. 2 and the like, according to the present embodiment, an upper surface of the outer layer 4c1 arranged on the upper side of the elastic member 4 is a flat surface, but unevenness and the like may be formed on the upper surface.

According to the present embodiment, the connection portion 4a of the elastic member 4 is connected to the outer member 2 by a linking portion 6. According to the present embodiment, the linking portion 6 includes a screw shaft 6a, a base plate 6b, and a nut 6c.

According to the present embodiment, the base plate 6b provided with the screw shaft 6a is attached to one end in the vehicle width direction of the connection portion 4a of the elastic member 4 (according to the present embodiment, the vehicle width direction outer side end of the connection portion 4a). According to the present embodiment, the screw shaft 6a passes through the long hole 2h formed in the connection plate 2f of the outer member 2, and is fixed to the connection plate 2f by the nut 6c. This allows the connection portion 4a of the elastic member 4 to move up and down along the long hole 2h. However, as long as the screw shaft 6a can pass through, the long hole 2h may be a circular hole.

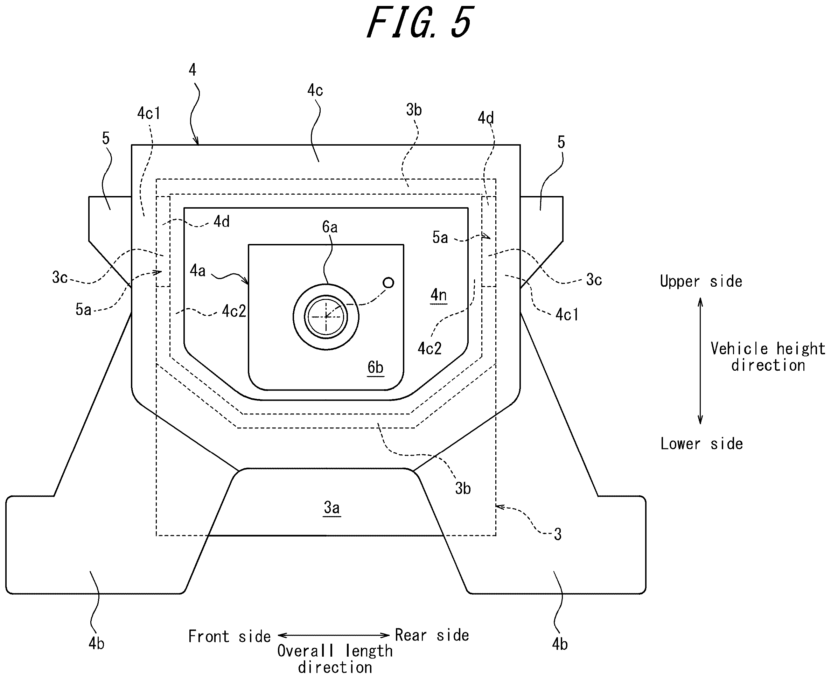

As illustrated in FIG. 5, according to the present embodiment, the elastic member 4 includes two leg portions 4b. According to the present embodiment, the elastic member 4 is formed with a recess 4n on one side in the vehicle width direction (the vehicle width direction outer side according to the present embodiment). According to the present embodiment, the recess 4n is formed by the inner circumferential surface of the inner layer 4c2 of the covering portion 4c, with the annular portion 3b of the inner member 3 as a frame. According to the present embodiment, the through portion 3c formed in the annular portion 3b is filled with the elastic member 4. As a result, the support portion 5a of the stopper 5 is formed in the through portion 3c of the inner member 3 so as to pass through the through portion 3c. According to the present embodiment, the support portion 5a of the stopper 5 includes a base portion 4d made of the elastic member 4 present in a region defined by the through portion 3c of the inner member 3, and the outer layer 4c1 and the inner layer 4c2 of the covering portion 4c connected to the base portion 4d. That is, according to the present embodiment, the stopper 5 includes the base portion 4d disposed in the through portion 3c formed in the inner member 3, the outer layer 4c1 of the covering portion 4c covering the inner member 3, and the inner layer 4c2 of the covering portion 4c.

According to the present embodiment, the support portion 5a of the stopper 5 includes the inner layer 4c2 of the elastic member 4 in addition to the outer layer 4c1 and the base portion 4d of the elastic member 4, as illustrated in FIG. 3. That is, according to the present embodiment, the thickness of the support portion 5a of the stopper 5 (according to the present embodiment, the thickness in the overall length direction) is the total thickness of the elastic member 4 that passes through the through portion 3c formed in the annular portion 3b of the inner member 3 (according to the present embodiment, the thickness in the overall length direction). However, the thickness of the support portion 5a of the stopper 5 may be changed as appropriate. For example, in a case where the inner layer 4c2 is not present in the elastic member 4, the thickness may be the thickness of the outer layer 4c1 and the base portion 4d of the elastic member 4 (according to the present embodiment, the thickness in the overall length direction). However, the support portion 5a of the stopper 5 may be formed by just the base portion 4d of the elastic member 4.

As described above, according to the present embodiment, the stopper 5 is formed integrally with the elastic member 4. In other words, according to the present embodiment, the stopper 5 is formed as a part of the elastic member 4, that is, according to the present embodiment, the stopper 5 is formed from the same elastic material as the elastic member 4. The elastic material is a material that has a lower rigidity than the outer member 2 and the inner member 3 and has elasticity for absorbing vibrations, such as rubber, elastomer, or the like. According to the present embodiment, the elastic member 4 is made of rubber.

According to the present embodiment, the elastic member 4 has two stoppers 5. The two stoppers 5 are formed on the front and rear sides of the covering portion 4c in the overall length direction, respectively. According to the present embodiment, the stoppers 5 are disposed at positions aligned in the overall length direction with the through portion 3c formed in the annular portion 3b of the inner member 3, as illustrated in FIG. 5. According to the present embodiment, as illustrated in FIG. 5, the elastic member 4 has the recess 4n formed inside the covering portion 4c of the elastic member 4 having the annular portion 3b of the inner member 3 as a frame in the axial direction view. According to the present embodiment, no other members are present in the recess 4n surrounding the connection portion 4a. Therefore, according to the present embodiment, in the axial direction view, the stopper 5 is supported by the base portion 4d made of the elastic member 4 present in a region defined by the through portion 3c of the inner member 3, and the outer layer 4c1 and the inner layer 4c2 of the elastic member 4 connected to the base 4d, that is, by only the elastic member 4.

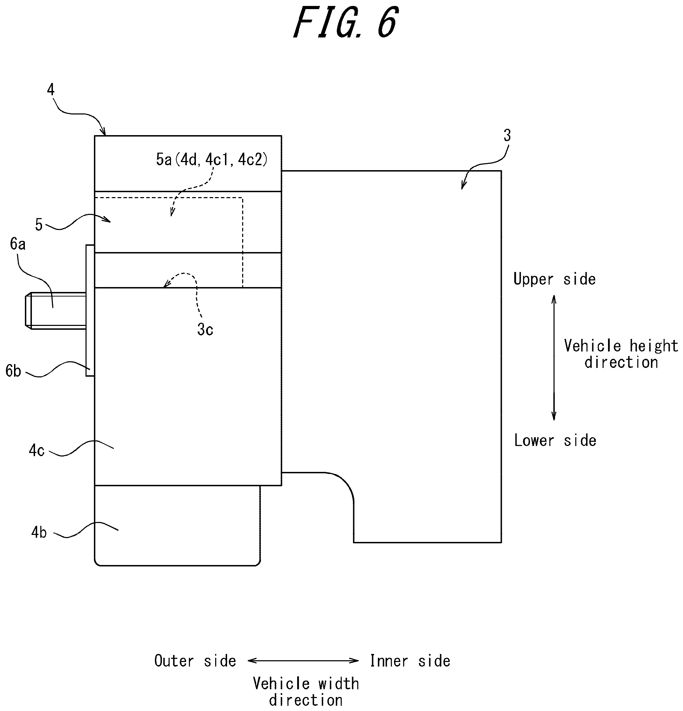

Further, as illustrated in FIG. 6, according to the present embodiment, the stopper 5 is formed over the entire covered portion 4c of the elastic member 4 in the vehicle width direction so as to include the through portion 3c formed in the inner member 3. As a result, the stopper 5 is supported by the base portion 4d of the elastic member 4 and the outer layer 4c1 and the inner layer 4c2 of the elastic member 4 connected to the base portion 4d, that is, only by the elastic member 4, even in the perpendicular-to-axis direction view that is also perpendicular to the vehicle height direction. According to the present embodiment, the through portion 3c of the inner member 3 is formed so as to be included in the stopper 5, but may be formed so as to coincide with the stopper 5. According to the present embodiment, the through portion 3c of the inner member 3 may be formed to include the stopper 5.

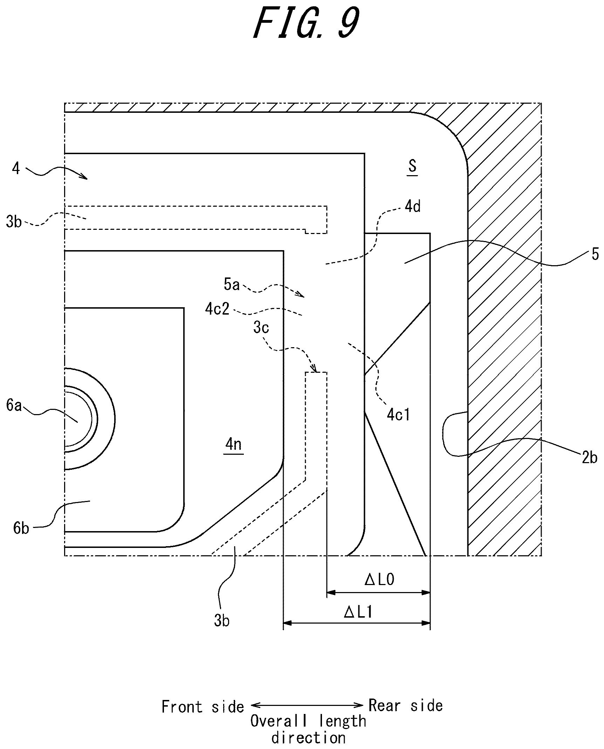

Here, basic operation of the stopper 5 provided in the anti-vibration device 1 is described with reference to FIG. 9.

The stopper 5 restricts relative displacement between the outer member 2 and the inner member 3 in the full-length direction by coming into contact with the full-length direction wall 2b of the outer member 2.

When no through portion 3c is present in the annular portion 3b of the inner member 3, the stopper 5 is supported via the elastic member 4 by the annular portion 3b of the inner member 3, which has high rigidity. Therefore, when the stopper 5 is disposed at the position of the annular portion 3b of the inner member 3, the restriction range of the stopper 5 is the range of a dimension ΔL0 between the overall length direction rear side end of the stopper 5 and the overall length direction rear side end of the annular portion 3b. In this case, the stopper 5 is suddenly compressed together with the elastic member 4 immediately after coming into contact with the full-length direction wall 2b of the outer member 2. Therefore, the spring constant of the stopper 5 increases rapidly with respect to the spring constant inherent to the elastic member 4 immediately after the stopper 5 comes into contact with the full-length direction wall 2b. That is, when the stopper 5 is disposed at the position of the annular portion 3b of the inner member 3 as in a conventional anti-vibration device, the actual spring properties change abruptly in the direction of becoming stiff immediately after contact with the outer member 2. Therefore, when the conventional anti-vibration device is used as an engine mount, there is a risk that the ride comfort will be adversely affected.

In contrast, in the case of the anti-vibration device 1 according to the present embodiment, the stopper 5 is supported by only the elastic member 4. Therefore, in the case of the anti-vibration device 1, the restriction range of the stopper 5 is theoretically a range equal to or greater than a dimension ΔL1 between the overall length direction rear side end of the stopper 5 and the inner circumferential surface of the recess 4n of the elastic member 4. In this case, the stopper 5 is not suddenly compressed together with the elastic member 4 immediately after coming into contact with the full-length direction wall 2b of the outer member 2. Therefore, the spring constant of the stopper 5 does not increase suddenly compared to the spring constant inherent to the elastic member 4, even after the stopper 5 comes into contact with the full-length direction wall 2b. That is, in the case of the anti-vibration device 1, the actual spring properties are unlikely to suddenly change in the direction of becoming stiff even after contact with the outer member 2. Therefore, when the anti-vibration device 1 is employed as, for example, an engine mount, it is possible to suppress the effect on ride comfort that may occur when the spring properties suddenly change in the direction of becoming stiff. In addition, according to the anti-vibration device 1 of the present embodiment, the thickness (ΔL0) of the elastic member 4 used to restrict displacement remains the same as in the case where the inner member 3 does not have the through portion 3c formed therein. Therefore, in the case of the anti-vibration device 1 of the present embodiment, there is no effect on durability and the like when compared to a conventional case.

As described above, according to the anti-vibration device 1 of the present embodiment, the stopper 5 is supported by the elastic member 4. For this reason, according to the anti-vibration device 1 of the present embodiment, it is possible to suppress an increase in the spring constant after coming into contact with the stopper while reliably restricting excessive displacement between the outer member 2 and the inner member 3, compared to a case in which the stopper 5 is not supported by the elastic member 4, even, for example, including a case in which the stopper 5 is supported by a rigid member rather than by an elastic member, when a separate rigid member (inner bracket) for connecting to the vibration-generating side or the vibration-receiving side is inserted into the annular portion 3b of the inner member 3, and the inner member 3 is connected to the vibration-generating side or the vibration-receiving side. This makes it possible to improve the ride comfort after coming into contact with the stopper while securing the reliability of the stopper 5.

Additionally, according to the present embodiment, the stopper 5 is supported by the elastic member 4 disposed in the through portion 3c formed in the annular portion 3b of the inner member 3. In this case, the through portion 3c is formed in the annular portion 3b of the inner member 3, and the base portion 4d of the elastic member 4 passing through the through portion 3c is connected to the stopper 5, thereby making it possible to support the stopper 5 only by the elastic member 4 with a simple configuration. According to the present embodiment, the through portion 3c is a notch, but the through portion 3c may be a through hole.

To address this, according to the present embodiment, the elastic member 4 includes the connection portion 4a that connects the outer member 2 and the inner member 3 so as to be aligned along a line in the direction in which the axis O extends, and the leg portions 4b that support the inner member 3 relative to the outer member 2, and further, the elastic member 4 covers the annular portion 3b of the inner member 3 so as to surround the connection portion 4a. In this case, the outer member 2 and the inner member 3 can be elastically linked with a simple configuration that is completely different from the anti-vibration device that uses the connecting member, and without using a separate connecting member. In addition, in this case, the base portion 4d of the elastic member 4 is adjacent to the recess 4n, and the portion that comes into contact due to relative displacement between the outer member 2 and the inner member 3 is the connection portion 4a of the elastic member 4. Accordingly, in this case, an increase in the spring constant after coming into contact with the stopper is effectively suppressed.

According to the present embodiment, the inner circumferential surface of the annular portion 3b of the inner member 3 is covered with the inner layer 4c2 of the elastic member 4. As a result, the base portion 4d of the elastic member 4 that supports the stopper 5 is continuous with the inner layer 4c2 of the covering portion 4c. In this case, the base portion 4d of the elastic member 4 is firmly fixed to the through portion 3c formed in the annular portion 3b of the inner member 3. Therefore, in this case, the durability of the anti-vibration device 1 can be improved.

The above description merely illustrates example embodiments of the present disclosure, and various modifications are possible without departing from the technical scope of the claims. For example, according to the present embodiment, the anti-vibration device 1 is described as being mounted so that the axis O is parallel to the vehicle width direction, but the anti-vibration device 1 may be mounted so that the axis O is parallel to the overall length direction or the vehicle height direction. Further, attachment is possible so that the axis O intersects with the vehicle width direction, the overall length direction, or the vehicle height direction. Further, according to the present embodiment, the outer member 2 is connected to the vibration-receiving side, but the outer member 2 may be connected to the vibration-generating side. In this case, according to the present embodiment, the inner member 3 connected to the vibration-generating side is connected to the vibration-receiving side.

### REFERENCE SIGNS LIST

1: anti-vibration device, 2: outer member, 2a: lower wall of outer member, 2b: overall length direction wall of outer member, 2c: upper wall of outer member, 2d: vehicle width direction wall of outer member, 2f: connection plate, 2h: long hole, 3: inner member, 3a: attachment portion of inner member, 3b: annular portion of inner member, 3c: through portion formed in annular portion of inner member, 3d: protruding portion provided on inner member, 4: elastic member, 4a: connection portion of elastic member, 4b: leg portion of elastic member, 4c: covering portion of elastic member, 4c1: outer layer of covering portion of elastic member, 4c2: inner layer of covering portion of elastic member, 4d: base portion made of elastic member present in region defined by through portion of inner member, 4n: recess formed in covering portion of elastic member, 5: stopper, 5a: support portion of stopper, 6: linking portion, 6a: screw shaft of linking portion, 6b: base plate of linking portion, 6c: nut of linking portion, A2: opening, S: accommodation space

## Claims

1. An anti-vibration device comprising: an outer member connected to one of a vibration-generating side or a vibration-receiving side; an inner member connected to the other of the vibration-generating side or the vibration-receiving side; an elastic member linking the outer member and the inner member and disposed inside the outer member; and
a stopper configured to restrict relative movement between the outer member and the inner member by contact with the outer member, the stopper being supported by the elastic member.

2. The anti-vibration device according to claim 1, wherein the inner member has an annular portion with a through portion, and
the stopper is supported by the elastic member including the elastic member disposed in the through portion.

3. The anti-vibration device according to claim 2, wherein the elastic member comprises a connection portion that connects the outer member and the inner member so as to be aligned along a line in a direction in which a shared axis extends, and a leg portion that supports the inner member relative to the outer member, and
the elastic member covers the annular portion of the inner member so as to surround the connection portion of the elastic member.

4. The anti-vibration device according to claim 2, wherein an inner circumferential surface of the annular portion of the inner member is covered by the elastic member.
